# EUROPÄISCHE PATENTSCHRIFT

(11) **EP 1 292 763 B1**
(45) Veröffentlichungstag und Bekanntmachung des Hinweises auf die Patenterteilung: **30.11.2005**
(21) Anmeldenummer: 01964991.2
(22) Anmeldetag: 15.06.2001
(51) Int. Cl.: F02D 41/02, F02D 41/40

(54) **VERFAHREN ZUM BETRIEB EINES DIESELMOTORS**
METHOD FOR OPERATING A DIESEL ENGINE
PROCEDE POUR ACTIONNER UN MOTEUR DIESEL

(30) Priorität: 21.06.2000 DE 10029504
(43) Veröffentlichungstag der Anmeldung: 19.03.2003
(60) Teilanmeldung: 05020051.8
(73) Patentinhaber: DaimlerChrysler AG, 70567 Stuttgart (DE)
(72) Erfinder: ADLER, Holger, 70197 Stuttgart (DE); ALLMENDINGER, Klaus, 89429 Bachhagel (DE); BECKER, Dirk, 76646 Bruchsal (DE); ERLENMAYER, Oliver, 75181 Pforzheim (DE); HASERT, Andreas, 73630 Remshalden (DE); HEMBERGER, Hans-Hubert, 73274 Notzingen (DE); KERCKHOFF, Anton, 70374 Stuttgart (DE); KURZE, Stefan, 71706 Markgröningen (DE); LENZ, Michael, 70734 Fellbach (DE); LIEBSCHER, Thomas, 70736 Fellbach (DE); MERTEN, Ulrich, 70771 Leinfelden (DE); ROLL, Andreas, 73734 Esslingen (DE); RUZICKA, Norbert, 71144 Steinenbronn (DE)
(86) Internationale Anmeldenummer: PCT/EP2001/006796
(87) Internationale Veröffentlichungsnummer: WO 2001/098645

(56) Entgegenhaltungen:
- EP-A- 0 732 485
- EP-A- 0 831 226
- EP-A- 1 077 319
- DE-A- 19 622 832

## Beschreibung

Die Erfindung betrifft ein Verfahren zum Betrieb eines Dieselmotors.

Bei bekannten Verfahren wird ein Luftverhältnis λ des zu verbrennenden Kraftstoffes und der separat zugeführten Verbrennungsluft von einer Steuereinheit nach vorgegebenen Werten für den jeweiligen Betriebszustand des Motors eingestellt. Die hierfür vorgesehenen Stellmittel werden von der Steuereinheit beaufschlagt. Die Steuereinheit bestimmt dabei die Menge des zu verbrennenden Kraftstoffes, die zum Erreichen der gewünschten Betriebslast des Dieselmotors führt. Oft wird dabei ein unterstöchiometrisches Kraftstoff/Luft-Verhältnis eingestellt und der Dieselmotor in sofern mit magerer Gemischbildung betrieben. Als Umschaltkriterium auf eine Sonderbetriebsart wird der Steuereinheit ein Sollwert einer Betriebsmeßgröße des Dieselmotors vorgegeben, bei dem ein bestimmtes Kraftstoff/Luft-Verhältnis nach Vorgabewerten für diese Sonderbetriebsart einzustellen sind. Dies kann beispielsweise dann der Fall sein, wenn eine Einrichtung zur Abgasnachbehandlung vorgesehen ist, wie etwa ein Speicherkatalysator, welcher turnusmäßig zu desorbieren ist. Hierzu wird der Sonderbetriebsart die erforderliche Desorptions-Atmosphäre durch Einstellen des Kraftstoff/Luft-Verhältnisses geschaffen. Ein solches Verfahren ist beispielsweise aus der DE 197 53 718 C1 bekannt, welches die Auswertung bestimmter Kriterien zur Umschaltung zwischen zwei verschiedenen Brennverfahren nutzt. Bei Feststellung des Umschaltkriteriums wird in die Sonderbetriebsart zur Regeneration eines dem Dieselmotor nachgeschalteten Speicherkatalysators umgeschaltet.

Die Umschaltung in eine Sonderbetriebsart des Dieselmotors bei Vorliegen eines bestimmen Umschaltkriteriums ist auch in der DE 199 39 988 A1 beschrieben, wobei in der Sonderbetriebsart ein Speicherkatalysator hinsichtlich der Stickoxid-Salze regeneriert werden soll. Hierzu wird in dem Regenerationsmodus als Sonderbetriebsart ein reduzierend auf den Katalysator wirkendes Abgas erzeugt.

Aus der DE 197 50 226 C1 ist eine Motorregelsystem bekannt, daß in Abhängigkeit von Kennfeldern den Betrieb eines Dieselmotors regelt. Dabei sind in einem Motorsteuergerät separate Kennfeder für eine Betriebsart mit magerer Verbrennung und eine Betriebsart mit fetter, kraftstoffreicher Verbrennung abgespeichert. Die zeitliche Dauer der Regeneration der Einrichtung zur Abgasnachbehandlung ist bei den bekannten Verfahren sehr lang. Auch ist oft die Umschaltung in die Sonderbetriebsart und zurück für den Fahrer eines von dem Motor angetriebenen Kraftfahrzeugs spürbar, was nicht erwünscht ist.

Die EP-A-0 831 226 offenbart ein Verfahren zum Betrieb eines Dieselmotors, bei dem ein Luftverhältnis des zu verbrennenden Kraftstoffes und der zugeführten Verbrennungsluft von einer Steuereinheit nach vorgegebenen Werten für den Betriebszustand des Motors durch Ansteuerung hierfür vorgesehener Stellmittel einstellt und dabei die der angeforderten Betriebslast des Dieselmotors entsprechenden Menge zu verbrennenden Kraftstoffes bestimmt, wobei die Steuereinheit bei Feststellung eines als Umschaltkriterium vorgegebenen Wertes einer Betriebsmeßgröße des Dieselmotors auf eine Sonderbetriebsart zur Regeneration einer Einrichtung zur Abgasnachbehandlung umschaltet und das Kraftstoff/Luft-Verhältnis nach Vorgabewerten für diese Betriebsart einstellt, wobei beider Sonderbetriebsart mindestens eine zeitlich von einer Haupteinspritzung abgesetzte Nacheinspritzung von Kraftstoff in einem derart späten Zeitraum während des Zyklus erfolgt, daß der dabei eingespritzte Kraftstoff mit dem bereits vorher zugemessenen und entzündeten Kraftstoff verbrannt wird.

Der vorliegenden Erfindung liegt die Aufgabe zugrunde, ein Verfahren zum Betrieb eines Dieselmotors der gattungsgemäßen Art zu schaffen, bei dem in der Sonderbetriebsart die Betriebsbedingungen verbessert sind.

Diese Aufgabe wird erfindungsgemäß mit den Merkmalen des Anspruchs 1 gelöst.

Erfindungsgemäß ist in der Sonderbetriebsart mindestens eine zeitlich von der Haupteinspritzung abgesetzte Nacheinspritzung von Kraftstoff vorgesehen, wobei der Zeitraum der Nacheinspritzung derartig spät während des Zyklus gelegt wird, daß der dabei eingespritzte Kraftstoff mit dem bereits brennenden Kraftstoff verbrannt wird. Auf diese Weise wird ein Abgas mit hoher Temperatur und Enthalpie gebildet. Damit kann sowohl die Regeneration von Partikelfiltern gefördert werden, bei denen ein überstöchiometrischer Betrieb vorgesehen ist, als auch eine effiziente Schwefelregeneration von NOx-Speicherkatalysatoren im unterstöchiometrischen Betrieb erreicht werden. Das erfindungsgemäße Verfahren schafft sowohl bei überstöchiometrischer Verbrennung, also fetter Gemischbildung, als auch unterstöchiometrischer Verbrennung mit magerem Kraftstoff/Luft-Gemisch reduzierend auf Katalysatoroberflächen wirkende Abgase. Die gesamte zu verbrennende Kraftstoffmenge wird in mehreren Teileinspritzungen eingebracht, wobei die Kraftstoffmenge, die vor der erfindungsgemäß mitbrennenden Nacheinspritzung abgegeben wird, mehreren Haupteinspritzungen oder auch einer beliebigen Anzahl an Voreinspritzungen zugemessen werden kann. Vorteilhaft kann die mitbrennende Nacheinspritzmenge auch in mehreren Nacheinspritzungen zugemessen werden.

Besonders vorteilhaft wird die mitbrennende Kraftstoffmenge der Nacheinspritzung entsprechend dem Betriebszustand des Motors dosiert und so letztlich durch die Einstellung der Nacheinspritzmenge die Betriebslast des Motors einregelt. Zweckmäßig kann dabei auch der Einspritzzeitpunkt der Nacheinspritzung entsprechend dem Betriebszustand von der Steuereinheit eingestellt werden. Die vor der mitbrennenden Nacheinspritzung erfolgenden Teileinspritzungen stellen bei früher Verbrennungslage eine Formung des Einspritzverlaufes dar, an den die Nacheinspritzung in Menge und Zeitpunkt an den Motorbetrieb anpaßbar ist.

Gemäss der Erfindung erhöht die Steuereinheit während einer Umschaltphase beim Umschalten in den Sonderbetriebszustand und zurück die Kraftstoffmenge der mitbrennenden Nacheinspritzung bei gleichzeitiger Reduzierung der Haupteinspritzmenge aufeinander folgender Zyklen in entsprechender Menge bis zum Erreichen der vorgesehenen Nacheinspritzmenge. Entsprechend wird beim Rückschalten in den Normalbetriebszustand die Nacheinspritzmenge reduziert bei analoger Erhöhung der Haupteinspritzmenge. So kann ein Übergang von magerer Gemischbildung mit Kraftstoff/Luft-Verhältnissen λ < 1 auf fette, kraftstoffreiche Verbrennung mit Luftverhältnissen λ > 1 dargestellt werden. Der Übergang von magerer zu fetter Verbrennung während der Umschaltphase kann mit kontinuierlich oder diskontinuierlich veränderten Mengen der Haupteinspritzung und der angepaßten mitbrennenden Nacheinspritzung erfolgen. Als Regelgröße der Änderung der Einspritzmengen wird ein indiziertes Moment des Dieselmotors herangezogen, welches während der Umschaltphase konstant gehalten wird. Auf diese Weise erfolgt die Umschaltung bzw. die Rückschaltung der Betriebszustände völlig ruckfrei und ist für den Führer eines Kraftfahrzeuges nicht spürbar.

Um in der Sonderbetriebsart die zur Regeneration eines Katalysators erforderliche Abgaszusammensetzung zu schaffen, kann es zweckmäßig sein, dem Abgas Kraftstoff zuzusetzen. Der zugesetzte Kraftstoff wird in der Abgasatmosphäre gecrackt und die dabei entstehenden Kohlenwasserstoffradikale tragen zur Senkung der Abgasemmision des Dieselmotors bei. Die Zusetzung von Kraftstoff kann durch eine oder mehrere zusätzliche Nacheinspritzungen vorgenommen werden, welche im Anschluß an die erfindungsgemäß mitbrennenden Nacheinspritzungen erfolgt. Optional kann aber auch eine in Menge und Zeitpunkt unabhängig vom Motorbetrieb dosierbare Kraftstoffeinspritzung in die Abgasleitung des Dieselmotors vorgesehen sein.

Mit dem erfindungsgemäßen Verfahren kann die Effizienz der Regeneration von NOx-Adsorbersystemen erhöht werden, welche unter bestimmten Voraussetzungen (Speicherkapazität, aktives Temperaturfenster) die Stickoxide von Brennkraftmaschinen bei magerer Verbrennung (überstöchiometrischer Verbrennung mit λ > 1 und demnach Restsauerstoff im Abgas) speichern. Das erfindungsgemäße Verfahren stellt rasch sauerstofffreies Abgas (λ < 1) mit möglichst hohem Reduktionsmittelgehalt bereit, welches zur Regeneration solcher NOx-Adsorbersysteme, also Desorption von NOx und gleichzeitiger NOx-Umsatz zu Stickoxid N₂ benötigt wird. Mit dem erfindungsgemäß mitbrennenden Kraftstoff der Nacheinspritzung werden ebenso rasch hohe Temperaturen des Abgases erreicht, welche die als Katalysatorgift wirkenden Ablagerungen von Schwefelverbindungen entfernen. Auch sind mit den hohen Temperaturen Partikelfilter rascher regenerierbar. Bekannte Katalysatoren benötigen nach dem Kaltstart eine gewisse Zeit bis zum Erreichen ihrer Starttemperatur. Durch den Einsatz des erfindungsgemäßen Brennverfahrens kann diese Zeit aufgrund der deutlich höheren Abgastemperatur gegenüber bekannten Verfahren verkürzt werden, wodurch eine erheblich geringere Abgasemmision beim Warmlauf des Dieselmotors erreicht wird.

Bei der Einstellung bzw. Regelung des Kraftstoff/Luft-Verhältnisses kann zweckmäßig auch die Menge an rückgeführtem und der Frischluft beigemischtem Abgas berücksichtigt werden, wobei die Steuereinheit als Stellglied der Regelung ein Abgasrückführungsventil ansteuert, das in einer Abgasrückführungsleitung zwischen Abgastrakt und Einlaßtrakt des Dieselmotors angeordnet ist. In einer Weiterbildung der Erfindung regelt die Steuereinheit neben der Einstellung der Einspritzparameter den Druck der zugeführten Frischluft zweckmäßig über Drosseleinrichtungen im Einlaßbereich und eine Aufladeeinrichtung im Abgasbereich des Dieselmotors. Die Druckregelung kann alternativ über das Abgasrückführungsventil und die Aufladeeinrichtung als Stellglieder erfolgen.

Weiterhin regelt die Steuereinheit vorteilhaft den Massendurchsatz der Frischluft, wobei die Steuereinheit das Abgasrückführungsventil als Stellglied unter Berücksichtigung eines Meßsignals eines Luftmassenmessers einsetzt. Die Regelung des Massendurchsatzes kann auch über Drosselklappen als Stellglieder erfolgen. Die Steuereinheit koordiniert dabei sämtliche Stellglieder und führt die Stellbewegungen in Abhängigkeit der erfaßten Regelabweichungen vom Sollwert im gesamten Betriebsbereich des Dieselmotors kontinuierlich nach. Mit entsprechenden Vorgabewerten auf Kennfeldern wird das erfindungsgemäße Verfahren auch in den stationären Betriebszuständen des Dieselmotors realisiert. Zum Einstellen eines lastneutralen Überganges wird vor dem Auslösen der Einspritzmaßnahmen beim Umschalten der Betriebszustände, also vor der Einspritzmengenänderung des Kraftstoffs der mitbrennenden Nacheinspritzung, der Luftpfad kontinuierlich eingeregelt, nämlich die Regelung des Saugrohrdruckes und des Massenstroms der Frischluft.

Die Erfindung ist nachstehend anhand eines Ausführungsbeispieles näher erläutert. Es zeigen:
- Fig. 1: eine schematische Darstellung eines Dieselmotors,
- Fig. 2: ein schematisches Schaubild der Bestimmung von Einstellwerten in der Steuereinheit.

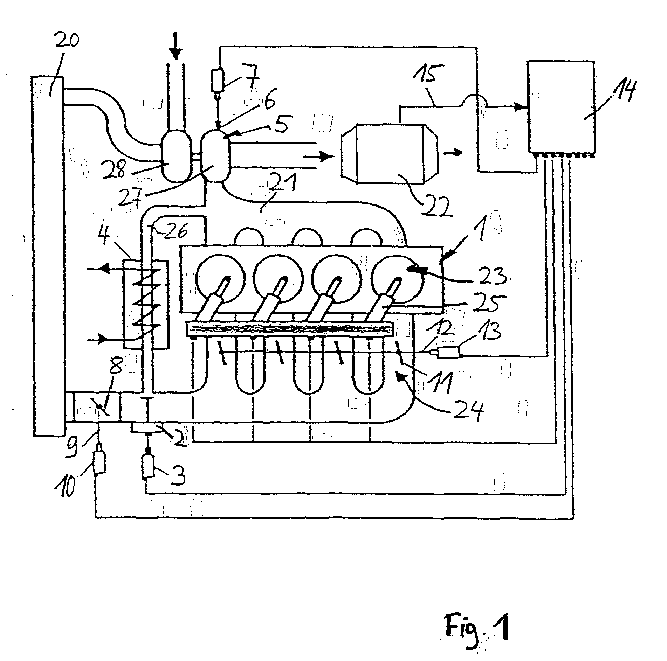

Fig. 1 zeigt einen Dieselmotor 1 mit vier Zylindern 23, denen jeweils ein Injektor 25 zugeordnet ist. Die aus einer gemeinsamen Druckleitung gespeisten Injektoren 25 spritzen nach Maßgabe eines Steuersignals einer Steuereinheit 14 Kraftstoff direkt in die Zylinder 23 ein, welcher mit separat zugeführter Verbrennungsluft verbrannt wird. Die Frischluft wird über eine Ansaugleitung 20 zugeführt, an die mittels Einlaßstutzen 24 die Zylinder 23 angeschlossen sind. Das Abgas aller Zylinder 23 wird über eine Abgasleitung 21 abgeführt und vor dem Ausstoß in die Umwelt durch einen Katalysator 22 geleitet. Die Abgasleitung 21 ist über eine Abgasrückführungsleitung 26 mit der Ansaugluftleitung 20 verbunden. Nach Öffnen eines Abgasrückführungsventils 2 kann so Abgas des Dieselmotors 1 der Frischluft beigemischt werden, wobei das rückgeführte Abgas vor dem Einströmen in die Ansaugluftleitung 20 durch einen Abgaskühler 4 herabgekühlt wird.

Das Verhältnis λ des in die Zylinder eingespritzten Kraftstoffes zu der Verbrennungsluft wird von der Steuereinheit 14 bestimmt, welche durch entsprechende Ansteuerung der Injektoren 25 die von ihnen abgegebene Kraftstoffmenge pro Arbeitsspiel als auch die den Zylindern 23 zugeführte Frischgasmenge einstellt. Abhängig von der eingesetzten Einrichtung zur Abgasnachbehandlung (Katalysator 22) kann der Dieselmotor dabei entweder mit unterstöchiometrischer Verbrennung oder überströchiometrischer, d.h. fetter Verbrennung mit Kraftstoffüberschuß (λ > 1) betrieben werden, wie es beispielsweise zur Desorption von NOx-Steuerkatalysatoren erforderlich ist. Stellt die Steuereinheit 14 das Vorliegen eines als Umschaltkriterium vorgegebenen Wertes einer Betriebsmeßgröße 15 des Dieselmotors fest, so wird auf eine Sonderbetriebsart zur Regeneration des Katalysators umgeschaltet und ein für diese Betriebsart vorgegebenes Kraftstoff/Luft-Verhältnis eingestellt. Zur Feststellung des Umschaltkriteriums kann beispielsweise der Steuereinheit der Sättigungsgrad des Katalysators 22 als Meßsignal 15 eingegeben werden.

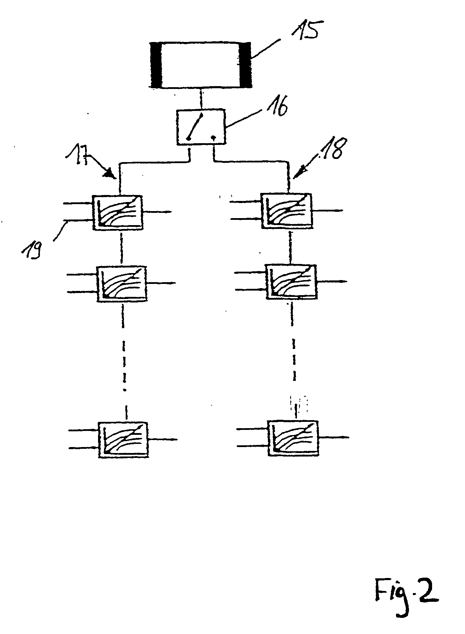

Wie in Fig. 2 schematisch dargestellt ist, verfügt die Steuereinheit 14 über Kennfelder, aus denen sie in Abhängigkeit laufend ermittelter Betriebsparameter geeignete Stellgrößen für die von ihr kontrollierten Stellglieder zur Einstellung des Kraftstoff/Luft-Verhältnisses ausliest. Dabei ist der Steuereinheit ein Kennfeldpfad 17 zur Einstellung einer mageren Verbrennung und entsprechenden Kennfeldern für alle Stellglieder zugeordnet. Ein Kennfeldpfad 18 zur Einstellung einer fetten, überstöchiometrischen Verbrennung enthält Kennfelder für jedes anzusteuernde Stellglied mit entsprechenden Stelldaten. Abhängig von dem Meßwert des Umschaltkriteriums 15 (Sättigungsgrad des Katalysators) wird einer der Kennfeldpfade 17, 18 zum Auslesen geöffnet, was schematisch durch Einstellung eines Schalters 16 dargestellt ist. Bei einem Normalbetrieb mit magerer Verbrennung, bei dem der Kennfeldpfad 17 mit seinen einzelnen Kennfeldern aktiviert ist, wird erfindungsgemäß bei vorliegen des Umschaltkriteriums in den Sonderbetriebszustand umgeschaltet und entsprechend auf die Betriebsart mit fetter Verbrennung gewechselt.

Jeder Kennfeldpfad enthält dabei ein Kennfeld mit Einspritzparametern für die Injektoren 25 und für jedes weitere Stellglied, welches von der Steuereinheit 14 zur Einstellung des Kraftstoff/Luft-Verhältnisses herangezogen wird. Zweckmäßig wird dabei das Abgasrückführungsventil 2 über einen Stellantrieb 3 von der Steuereinheit 14 eingesetzt. Die Abgasatmosphäre zur effektiven Desorption des Katalysators 22 wird in der Sonderbetriebsart erfindungsgemäß durch eine Nacheinspritzung im Anschluß an die Haupteinspritzung und gegebenenfalls die Voreinspritzungen geschaffen, wobei der nachträglich eingespritzte Kraftstoff an der bereits erfolgenden Verbrennung teilnimmt. Die Einregelung der gewünschten Abgaszusammensetzung wird zusätzlich durch die geeignete Einstellung des Abgasrückführungsventils beeinflußt. Des weiteren nimmt die Steuereinheit 14 durch Ansteuerung einer Drosseleinrichtung in der Ansaugluftleitung 20 und eine Aufladeeinrichtung im Abgastrakt auf die Einstellung des Kraftstoff/Luft-Verhältnisses λ Einfluß.

Als Drosseleinrichtung kann eine Drosselklappe 8 in der Ansaugluftleitung vorgesehen sein, die über ein entsprechendes Stellglied 9 mittels eines Stellantriebes 10 von der Steuereinheit 14 in die aus einem entsprechenden Kennfeld (Fig. 2) ausgelesene Position gebracht wird. Alternativ zu der Drosselklappe 8 in der Ansaugluftleitung 20 kann in jedem Einlaßstutzen 24 der Zylinder 23 ein Drosselorgan 11 angeordnet sein. Die Steuereinheit 14 stellt alle Drosseleinrichtungen 11 in den Einlaßstutzen 24 über ein gemeinsames Stellglied 12 und einen auf das Stellglied 12 wirkenden Stellantrieb 13 ein. Als weiteres Stellglied mit Wirkung auf das Kraftstoff/Luft-Verhältnis beaufschlagt die Steuereinheit 14 eine Aufladeeinrichtung im Abgastrakt, die im vorliegenden Ausführungsbeispiel ein Abgasturbolator 5 ist, der aus einer vom Abgas beaufschlagten Turbine 27 und einem auf die Frischluft wirkenden Verdichter 28 besteht. Das Stellglied 6 des Abgasturbolators, das über dem Stellantrieb 7 von der Steuereinheit bedarfsweise einstellbar ist, kann beispielsweise eine variabel einstellbare Turbinengeometrie sein.

Der Dieselmotor wird mit dem erfindungsgemäßen Verfahren im Sonderbetriebszustand mit einer mitbrennenden Nacheinspritzung betrieben, die sich an eine beliebige Anzahl an Voreinspritzungen und ein bis zwei Haupteinspritzungen anschließt. Des weiteren kann eine weitere zeitlich abgesetzte Nacheineinspritzung in den Brennraum eingebracht werden, wobei der hier eingespritzte Kraftstoff nicht mehr an der Verbrennung teilnimmt und zur Schaffung einer Abgasatmosphäre beiträgt, die über eine längere Betriebszeit effizienter von dem Katalysator reinigbar ist. Die erfindungsgemäße Nacheinspritzung wird bezüglich Einspritzzeitpunkt und -dauer so ausgelegt, daß je nach Bedarf überstöchiometrische oder unterstöchiometrische Luftverhältnisse geschaffen werden. Der maximale Druckanstieg im Brennraum und die zeitliche Lage des maximalen Druckanstieges entsprechen bei dem erfindungsgemäßen Verfahren in etwa den Werten im Normalbetrieb mit lediglich Vor- und Haupteinspritzung. Die Regelung der Motorlast erfolgt über die an der Verbrennung teilnehmende Einspritzmenge, also im Sonderbetriebszustand unter Einschluß und maßgeblicher Berücksichtigung der mitbrennenden Nacheinspritzmenge. Mit dem erfindungsgemäßen Verfahren können ohne Anhebung der Geräuschentwicklung rasch höhere Abgastemperaturen und - enthalpien erreicht werden und so die Effizienz von Katalysatoren auch insbesondere während der Warmlaufphase gesteigert werden.

Die Anteile der Haupteinspritzmenge und der Nacheinspritzmenge an der gesamten Einspritzmenge bzw. deren Änderungen während der Übergangsphase beim Wechsel der Betriebsart von fetter zu magerer Verbrennung und umgekehrt wird von der Steuereinheit in Abhängigkeit eines oder mehrerer Betriebsparameter 19 (Fig. 2) eingestellt. Als solche Betriebsparameter, mit denen die Kennfelder für die jeweils zu wählende Betriebsart ausgelesen werden, kommen die folgenden physikalisch meßbaren Größen in Frage:
- Motordrehmoment und seine Ableitung
- Motordrehzahl und ihre Ableitung
- Fahrgeschwindigkeit eines vom Dieselmotor angetriebenen Fahrzeuges
- Fahrstufe/Gang
- Gesamteinspritzmenge
- Luftmasse und ihre Ableitung
- Kühlmitteltemperatur
- Außenlufttemperatur
- Saugrohrtemperatur
- Abgastemperatur
- Atomsphärendruck
- Saugrohrdruck
- Abgasdruck

## Patentansprüche

1. Verfahren zum Betrieb eines Dieselmotors, bei dem ein Luftverhältnis des zu verbrennenden Kraftstoffes und der zugeführten Verbrennungsluft von einer Steuereinheit (14) nach vorgegebenen Werten für den Betriebszustand des Motors (1) durch Ansteuerung hierfür vorgesehener Stellmittel (2, 5, 8, 11, 25) einstellt und dabei die der angeforderten Betriebslast des Dieselmotors (1) entsprechenden Menge zu verbrennenden Kraftstoffes bestimmt, wobei die Steuereinheit (14) bei Feststellung eines als Umschaltkriterium vorgegebenen Wertes einer Betriebsmeßgröße (15) des Dieselmotors auf eine Sonderbetriebsart zur Regeneration einer Einrichtung zur Abgasnachbehandlung umschaltet und das Kraftstoff/Luft-Verhältnis nach Vorgabewerten für diese Betriebsart einstellt, wobei in der Sonderbetriebsart mindestens eine zeitlich von einer Haupteinspritzung abgesetzte Nacheinspritzung von Kraftstoff in einem derart späten Zeitraum während des Zyklus erfolgt, daß der dabei eingespritzte Kraftstoff mit dem bereits vorher zugemessenen und entzündeten Kraftstoff verbrannt wird und die Steuereinheit (14) während einer Umschaltphase beim Umschalten in den Sonderbetriebszustand und zurück die Kraftstoffmenge der mitverbrennenden Nacheinspritzung bei gleichzeitiger Reduzierung der Haupteinspritzmenge in entsprechender Menge bei aufeinanderfolgenden Zyklen erhöht bis zum Erreichen der vorgesehenen Nacheinspritzmenge bzw. beim Rückschalten in einen Normalbetriebszustand die Nacheinspritzmenge reduziert bei analoger Erhöhung der Haupteinspritzmenge.

2. Verfahren nach Anspruch 1,
**dadurch gekennzeichnet, daß** die mitverbrennende Kraftstoffmenge der Nacheinspritzung dem Betriebszustand des Dieselmotors (1) entsprechend dosiert wird.

3. Verfahren nach Anspruch 1 oder 2,
**dadurch gekennzeichnet, daß** die Steuereinheit (14) den Einspritzzeitpunkt der Nacheinspritzung für den mitverbrennenden Kraftstoff entsprechend dem Betriebszustand des Dieselmotors (1) einstellt.

4. Verfahren nach einem der Ansprüche 1 bis 3,
**dadurch gekennzeichnet, daß** die analoge Änderung der Haupteinspritzmenge und der mitverbrennenden Nacheinspritzmenge während der Umschaltphase unter Berücksichtigung einer Regelgröße geregelt wird.

5. Verfahren nach Anspruch 4,
**dadurch gekennzeichnet, daß** als Regelgröße ein indiziertes Moment des Dieselmotors (1) herangezogen wird, welches während der Umschaltphase konstant gehalten wird.

6. Verfahren nach einem der Ansprüche 1 bis 5,
**dadurch gekennzeichnet, daß** dem Abgas zusätzlicher Kraftstoff zur Schaffung des vorgesehenen Kraftstoff/Luft-Verhältnisses im Abgas zugesetzt wird.

7. Verfahren nach Anspruch 6,
**dadurch gekennzeichnet, daß** der zusätzliche Kraftstoff dem Abgas durch eine zusätzliche Nacheinspritzung im Anschluß an die Nacheinspritzung mitverbrennenden Kraftstoffes zugesetzt wird.

8. Verfahren nach Anspruch 7,
**dadurch gekennzeichnet, daß** der zusätzliche Kraftstoff dem Abgas in einer Abgasleitung des Dieselmotors (1) zugesetzt wird.

9. Verfahren nach einem der Ansprüchen 1 bis 8,
**dadurch gekennzeichnet, daß** in der Normalbetriebsart ein über- oder unterstöchiometrisches Kraftstoff/Luft-Verhältnis und in der Sonderbetriebsart ein unter- oder überstöchiometrisches Kraftstoff/Luft-Verhältnis eingestellt wird.

10. Verfahren nach einem der Ansprüche 1 bis 9,
**dadurch gekennzeichnet, daß** die Steuereinheit (14) bei der Einstellung des Kraftstoff/Luft-Verhältnisses die dem Frischgas beigemischte Menge rückgeführten Abgases berücksichtigt und ein Abgasrückführungsventil (2) in einer Abgasrückführungsleitung (26) des Dieselmotors (1) als Stellglied der Regelung des Kraftstoff/Luft-Verhältnisses ansteuert.

11. Verfahren nach einem der Ansprüche 1 bis 10,
**dadurch gekennzeichnet, daß** die Steuereinheit (14) den Druck der zugeführten Frischluft regelt.

12. Verfahren nach Anspruch 11,
**dadurch gekennzeichnet, daß** die Regelung des Frischluftdruckes über Drosselklappen (8, 11) und eine einstellbare Aufladeeinrichtung (5) als Stellglieder erfolgt.

13. Verfahren nach Anspruch 11,
**dadurch gekennzeichnet, daß** die Regelung des Frischluftdruckes über das Abgasrückführungsventil (2) und eine einstellbare Aufladeeinrichtung (5) als Stellglieder erfolgt.

14. Verfahren nach einem der Ansprüche 11 bis 13,
**dadurch gekennzeichnet, daß** die Steuereinheit (14) den Massendurchsatz der Frischluft regelt.

15. Verfahren nach Anspruch 14,
**dadurch gekennzeichnet, daß** die Regelung des Massendurchsatzes über das Abgasrückführungsventil (2) als Stellglied unter Berücksichtung eines Meßsignals eines Luftmassenmessers erfolgt.

16. Verfahren nach Anspruch 14,
**dadurch gekennzeichnet, daß** die Regelung des Massendurchsatzes über Drosselorgane (8, 11) als Stellglieder erfolgt.

17. Verfahren nach einem der Ansprüche 1 bis 16,
**dadurch gekennzeichnet, daß** die Steuereinheit alle von ihr angesteuerten Stellglieder (2, 6, 9, 12, 25) in Abhängigkeit der erfaßten Regelabweichung im gesamten Betriebsbereich des Dieselmotors (1) nachführt.

## Claims

1. A process for operating a diesel engine in which an air ratio of the fuel to be combusted and the combustion air fed in is set by a control unit (14) in accordance with predetermined values for the operating mode of the engine (1) by actuating control elements (2, 5, 8, 11, 25) provided for this purpose and in so doing determines the volume of fuel to be combusted in accordance with the required operating load of the diesel engine (1), the control unit (14) changing over to a special operating mode for the regeneration of a device for the treatment of exhaust gas when a value for an operating measurement variable (15) of the diesel engine predetermined as a change-over criterion is determined and the fuel/air ratio being set according to predetermined values for this mode of operation, at least one secondary injection delayed in relation to a main injection of fuel taking place in such a manner in a subsequent period of the cycle in the special operating mode that the fuel injected thereby is combusted with the previously apportioned and ignited fuel and, in a change-over phase when changing over to the special operating mode and back, the control unit (14) increases the volume of fuel for the co-combusting secondary injection whilst at the same time reducing the main injection volume commensurately in consecutive cycles until the predetermined secondary injection volume is reached or, when changing back to a normal operating mode, reduces the secondary injection volume whilst at the same time increasing the main injection volume accordingly.

2. A process in accordance with claim 1,
**characterised in that**
the co-combusting fuel volume of the secondary injection is apportioned in accordance with the operating mode of the diesel engine (1).

3. A process in accordance with claim 1 or 2,
**characterised in that**
the control unit (14) sets the injection point of the secondary injection for the co-combusting fuel in accordance with the operating mode of the diesel engine (1).

4. A process in accordance with one of claims 1 to 3,
**characterised in that**
the commensurate change in the main injection volume and the co-combusting secondary injection volume is controlled during the change-over phase taking into account a regulating variable.

5. A process in accordance with claim 4,
**characterised in that**
an indexed torque of the diesel engine (1) which is kept constant during the change-over phase is used as the regulating variable.

6. A process in accordance with one of claims 1 to 5,
**characterised in that**
additional fuel is added to the exhaust gas in order to create the predetermined fuel/air ratio in the exhaust gas.

7. A process in accordance with claim 6,
**characterised in that**
the additional fuel is added to the exhaust gas by means of a further additional injection following the secondary injection of co-combusting fuel.

8. A process in accordance with claim 7,
**characterised in that**
the additional fuel is added to the exhaust gas in an exhaust gas line of the diesel engine (1).

9. A process in accordance with one of claims 1 to 8,
**characterised in that**
a lean or rich of stoichiometry fuel/air ratio is set in normal operating mode and a rich or lean of stoichiometry fuel/air ratio is set in special operating mode.

10. A process in accordance with one of claims 1 to 9,
**characterised in that**
when setting the fuel/air ratio the control unit (14) takes into account the volume of recirculated exhaust gas mixed with the fresh gas and actuates an exhaust gas recirculation valve (2) in an exhaust gas recirculation line (26) of the diesel engine (1) as a control element for the regulation of the fuel/air mixture.

11. A process in accordance with one of claims 1 to 10,
**characterised in that**
the control unit (14) regulates the pressure of the fresh air fed in.

12. A process in accordance with claim 11,
**characterised in that**
the fresh air pressure is regulated by means of throttle valves (8, 11) and an adjustable supercharger device (5) as the control elements.

13. A process in accordance with claim 11,
**characterised in that**
the fresh air pressure is regulated by means of the exhaust gas recirculation valve (2) and an adjustable supercharger device (5) as the control elements.

14. A process in accordance with one of claims 11 to 13,
**characterised in that**
the control unit (14) regulates the mass throughput of fresh air.

15. A process in accordance with claim 14,
**characterised in that**
the mass air throughput is regulated by means of the exhaust gas recirculation valve (2) as the control element taking into account a measurement signal from a mass air flow meter.

16. A process in accordance with claim 14,
**characterised in that**
the mass air throughput is regulated by means of throttle elements (8, 11) as the control elements.

17. A process in accordance with one of claims 1 to 16,
**characterised in that**
the control unit operates all the control elements (2, 6, 9, 12, 25) which it actuates dependent on the standard deviation measured over the entire operating range of the diesel engine.

## Revendications

1. Procédé pour le service d'un moteur Diesel, où un rapport d'air du carburant à brûler et de l'air de combustion alimenté est réglé suivant des valeurs prescrites pour l'état de service du moteur (1) par commande de moyens de réglage (2, 5, 8, 11, 25) prévus à cet effet depuis une unité de commande (14) déterminant le débit de carburant à brûler correspondant à la charge de service exigée du moteur Diesel (1), où l'unité de commande (14) commute un mode de service spécifique pour la régénération d'un dispositif de traitement du gaz d'échappement lorsqu'une valeur d'une grandeur de mesure de service (15) du moteur Diesel (1), prescrite comme critère de commutation, est constatée, et règle le facteur carburant/air suivant des valeurs prescrites pour ce mode de service, où au moins une injection consécutive de carburant a lieu en cours de mode de service spécifique, temporellement décalée de l'injection principale, dans une période tardive du cycle telle que le carburant alors injecté est brûlé avec le carburant précédemment alloué et allumé, et où l'unité de commande (14) augmente pendant une phase de commutation, lors de la commutation vers et depuis l'état de service spécifique, le débit de carburant de l'injection consécutive à brûler avec réduction simultanée correspondante du débit d'injection principale lors de cycles successifs, jusqu'à atteindre le débit d'injection consécutive prévu, ou réduit le débit d'injection consécutive avec une élévation analogue du débit d'injection principale lors du retour à un état de service normal.

2. Procédé selon la revendication 1,
**caractérisé en ce que** le débit de carburant de l'injection consécutive à brûler conjointement est dosé en fonction de l'état de service du moteur Diesel (1).

3. Procédé selon la revendication 1 ou 2,
**caractérisé en ce que** l'unité de commande (14) règle le moment d'injection de l'injection consécutive pour le carburant à brûler conjointement en fonction de l'état de service du moteur Diesel (1).

4. Procédé selon l'une des revendications 1 à 3,
**caractérisé en ce que** la modification analogue du débit d'injection principale et du débit d'injection consécutive à brûler conjointement est régulé pendant la phase de commutation en tenant compte d'une grandeur de régulation.

5. Procédé selon la revendication 4,
**caractérisé en ce qu'**il est recouru à un couple indexé du moteur Diesel (1) comme grandeur de régulation, lequel est maintenu constant pendant la phase de commutation.

6. Procédé selon l'une des revendications 1 à 5,
**caractérisé en ce que** du carburant additionnel est ajouté au gaz d'échappement pour réaliser le facteur carburant/air prévu dans le gaz d'échappement.

7. Procédé selon la revendication 6,
**caractérisé en ce que** le carburant additionnel est ajouté au gaz d'échappement par une injection consécutive additionnelle suite à l'injection consécutive de carburant à brûler conjointement.

8. Procédé selon la revendication 7,
**caractérisé en ce que** le carburant additionnel est ajouté au gaz d'échappement dans une conduite de gaz d'échappement du moteur Diesel (1).

9. Procédé selon l'une des revendications 1 à 8,
**caractérisé en ce qu'**en mode de service normal, un facteur carburant/air sur-stoéchiométrique ou sous-stoéchiométrique est réglé, et un facteur carburant/air sous-stoéchiométrique ou sur-stoéchiométrique en mode de service spécifique.

10. Procédé selon l'une des revendications 1 à 9,
**caractérisé en ce que** l'unité de commande (14) tient compte du débit de gaz d'échappement reconduit ajouté au gaz frais pour le réglage du facteur carburant/air et commande une soupape de recirculation de gaz d'échappement (2) dans une conduite de recirculation de gaz d'échappement (26) du moteur Diesel (1) en tant qu'élément de réglage de la régulation du facteur carburant/air.

11. Procédé selon l'une des revendications 1 à 10,
**caractérisé en ce que** l'unité de commande (14) régule la pression de l'air frais alimenté.

12. Procédé selon la revendication 11,
**caractérisé en ce que** la régulation de la pression d'air frais est exécutée par des papillons (8, 11) et un dispositif de suralimentation réglable (5) en tant qu'élément de réglage.

13. Procédé selon la revendication 11,
**caractérisé en ce que** la régulation de la pression d'air frais est exécutée par la soupape de recirculation de gaz d'échappement (2) et un dispositif de suralimentation réglable (5) en tant qu'élément de réglage.

14. Procédé selon l'une des revendications 11 à 13,
**caractérisé en ce que** l'unité de commande (14) régule le débit massique de l'air frais.

15. Procédé selon la revendication 14,
**caractérisé en ce que** la régulation de débit massique est exécutée par la soupape de recirculation de gaz d'échappement (2) en tant qu'élément de réglage en tenant compte d'un signal de mesure d'un mesureur de masse d'air.

16. Procédé selon la revendication 14,
**caractérisé en ce que** la régulation de débit massique est exécutée par des organes d'étranglement (8, 11) en tant qu'éléments de réglage.

17. Procédé selon l'une des revendications 1 à 16,
**caractérisé en ce que** l'unité de commande suit tous les éléments de réglage (2, 6, 9, 12, 25) commandés par elle en fonction de l'écart de régulation saisi dans toute la plage de service du moteur Diesel (1).
